# EUROPEAN PATENT APPLICATION

(11) **EP 4 696 886 A1**
(43) Date of publication of application: **18.02.2026**
(21) Application number: 24207689.1
(22) Date of filing: 21.10.2024
(51) Int. Cl.: F03D 17/00

(54) **A SYSTEM AND METHOD FOR DETERMINING ROUGHNESS IN WIND TURBINE BLADES**

(30) Priority: 14.08.2024 IN 202411061714
(71) Applicant: RE Technologies GmbH, 22083 Hamburg (DE)
(72) Inventor: Sakthivel, Mahendran, 560066 Bengaluru, Karnataka (IN); Chaganti, Kalyan, 560066 Bengaluru, Karnataka (IN)
(74) Representative: Buzzi, Notaro & Antonielli d'Oulx S.p.A.

(57) **Abstract**

The Invention determines roughness in wind turbine blades based on real time conditions. The invention also evaluates the performance of wind turbine by overruling the other possible factors contributing to lower performance of the wind turbine and determining the roughness in wind turbine blades being the determinative factor for the low performance of a wind turbine. The present invention determines roughness in the wind turbine blades based on a mechanism which can provide hub height wind speed input to the controller that is experienced by the turbine in real time basis.

## Description

### FIELD OF THE INVENTION:

The invention, in general, relates to the technical field of wind turbine. More particularly, the present invention provides a system and method for determining roughness in wind turbine blades.

### BACKGROUND OF THE INVENTION:

The following background discussion includes information that may be useful in understanding the present invention. It is not an admission that any of the information provided herein is prior art or relevant to the presently claimed invention, or that any publication specifically or implicitly referenced is prior art.

Since wind turbines are the main technology used to capture wind energy, thus, improvements are constantly being made to increase its reliability as well as effectiveness. The aerodynamic efficiency and blade roughness of wind turbines are two important parameters among many other factors that impact their performance. Blade roughness on wind turbine/s is primarily caused by environmental factors such as dust, dirt, insect accumulation, ice formation, and erosion from rain and sand particles. Rough blades can significantly degrade aerodynamic performance, leading to reduced energy capture and increased mechanical stress on the turbine components. The roughness in wind turbine blades can also cause increased drag and reduced lift thus lowering the overall aerodynamic efficiency of the blades, Imbalanced loads on the rotor causing increased wear and tear on mechanical parts, Higher maintenance costs, Shorter operational life for turbine components etc.

Further, fouling and/or other factors can also cause the rotor blades to become aerodynamically rough, which reduces the wind turbine's power output and, consequently, its Annual Energy Production (AEP). Increased surface roughness may lead to a notable increase in the noise produced by the rotor blades in addition to this performance decrease.

In order to increase wind power generation, the turbine performance needs to be improved thoroughly. This problem of power performance deterioration in wind turbines caused by dirt accumulation on blades, is especially prevalent in Asia Pacific and China (APAC) markets due to external weather conditions. This issue leads to generation loss for customers, as the nacelle anemometer, positioned behind the rotor, measures wind speed influenced by the rotor wake, thereby masking the root cause of lower performance.

Further, the performance metrics are derived based on nacelle anemometer placed right behind the rotor. The wind speed measured by the anemometer is under the influence of its own rotor wake. Most of the wind turbines now a days have the wind speed estimator capability, but this estimator doesn't have any true reference to act on the difference. The only reference available is the wind speed measured by the anemometer, which is under the influence of its own rotor wake. Thus, in the existing setups, the controller is not able to identify the root cause of lower performance. The current practice involves identifying blade roughness through physical inspection and correlating it with lower nacelle anemometer performance metrics, which is a complicated method.

Hence, there is a need of a technology which can reduce the time and effort required to estimate blade roughness, enabling quicker corrective actions such as adjusting turbine operation or cleaning the blades to restore the expected power performance.

For example, DK178737B1 discloses a control method and a wind turbine for adaptively adjusting the operation of the wind turbine to maintain maximum power production during degraded conditions. The control system comprises an estimator module that determines a scaling factor based on the current set of control signals and at least the current set of measurement of the operational parameters.

Further, JP6972255B2 disclose estimating the surface condition of a blade rotating about a rotational axis in an air or fluid stream. The method involves measuring blade deformations indicative of blade loads acting on the blade to identify actual blade loads (P,R,T), measuring blade-state information (Ψ,Ω,,V) indicative of a blade operational state to identify a given blade operational state (α,Q), providing a clean-surface aerodynamic map (c) relating blade loads to an ensemble of blade operational states when the blade surface is in a clean state, providing a dirty-surface aerodynamic map (d) relating blade loads to an ensemble of blade operational states when the blade surface is in a dirty state, estimating the surface condition of the blade by comparing the distance of the actual blade loads (P,R,T) to the blade loads given by the clean-surface aerodynamic map (c) at the given operational state (α,Q), and the distance of the actual blade loads (P,R,T) to the blade loads given by the dirty-surface aerodynamic map (c) at the given operational state (α,Q).

The above-mentioned however are not efficient to determine the roughness in wind turbine blades effectively based on real time wind speed and real time output from the wind turbine.

There is a need of a technology which identifies the roughness in wind turbine blades based on a mechanism which can provide hub height wind speed as input to the controller that is experienced by the turbine in real time basis and does not give false value.

There is also a need of a system which can overrule various possibilities of lower performance of a wind turbine and provide confirmatory information that the lower performance of a wind turbine is due to the roughness in wind turbine blades.

### OBJECTIVE OF THE INVENTION:

The primary object of the present invention is to overcome the drawbacks associated with prior art.

An object of the present invention is to determine roughness in wind turbine blades prior to routine physical inspection, enabling quicker corrective actions such as adjusting turbine operation or cleaning the blades to restore expected power performance.

Another object of the present invention is to eliminate various possibilities of lower performance of a wind turbine and providing proactive diagnosis that the lower performance of a wind turbine may be due to the roughness in the wind turbine blades.

Another object of the present invention is to determine roughness in wind turbine blades effectively based on real time conditions.

### SUMMARY OF THE INVENTION:

In an aspect of the invention, there is provided a system for determining roughness in wind turbine blades, comprising:
a Light Detection and Ranging (LIDAR) unit, positioned in proximity of the wind turbine blades to measure a first wind speed;
a controller of the wind turbine, configured to:
   determining a second wind speed derived from a plurality of performance parameters of the wind turbine, the second wind speed retrievable from a Supervisory Control and Data Acquisition (SCADA) system connected to the wind turbine;
   determining a delta value by calculating a difference between the first wind speed and the second wind speed;
   comparing the delta value to a pre-defined threshold; and
   determining that there is roughness in the blade if the delta value is greater than the pre-defined threshold.

In another aspect of the invention, there is provided a method of determining roughness in wind turbine blades, the method comprising:
determining a first wind speed by a Light Detection and Ranging (LIDAR) unit positioned in proximity to the wind turbine blades;
determining a second wind speed, the second wind speed derived from a plurality of performance parameters, the second wind speed retrievable from a Supervisory Control and Data Acquisition (SCADA) system connected to the wind turbine;
determining a delta value by calculating a difference between the first wind speed and the second wind speed;
comparing the delta value to a pre-defined threshold;
determining that there is a roughness in the blade if the delta value is greater than the pre-defined threshold.

### DETAILED DESCRIPTION OF DRAWINGS:

To further clarify the advantages and features of the present invention, a more particular description of the invention will be rendered by reference to specific embodiments thereof, which are illustrated in the appended drawings. It is appreciated that these drawings depict only typical embodiments of the invention and are therefore not to be considered limiting in their scope. The invention will be described and explained with additional specificity and detail with the accompanying drawings in which:

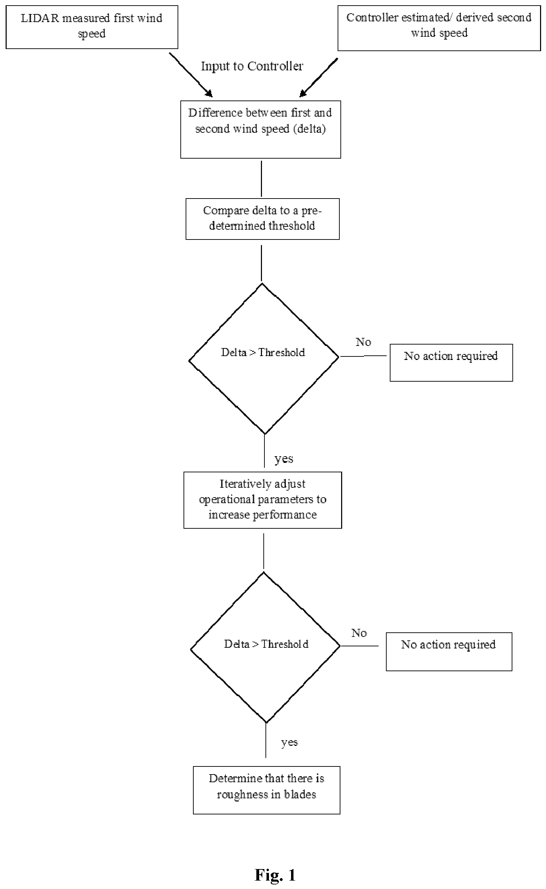

Fig. 1 illustrate a flowchart depicting a method of the present invention.

### DETAILED DESCRIPTION:

For the purpose of promoting an understanding of the principles of the invention, reference will now be made to the embodiment illustrated in the drawings and specific language will be used to describe the same. It will nevertheless be understood that no limitation of the scope of the invention is thereby intended, such alterations and further modifications in the illustrated system, and such further applications of the principles of the invention as illustrated therein being contemplated as would normally occur to one skilled in the art to which the invention relates.

It will be understood by those skilled in the art that the foregoing general description and the following detailed description are exemplary and explanatory of the invention and are not intended to be restrictive thereof.

The present invention provides a system and method which can reduce the time and effort required to estimate roughness in wind turbine blades, enabling quicker corrective actions such as adjusting turbine operation or cleaning the blades to restore expected power performance.

In a preferred embodiment, the present invention provides a system and method thereof to proactively detect roughness in wind turbine blades effectively based on real time conditions.

In an embodiment, the system and its method can overrule various possibilities of lower performance of a wind turbine and provides confirmatory information that the lower performance of a wind turbine is due to the roughness of blade of the wind turbine.

The present invention provides a system for determining roughness in wind turbine blades in a wind turbine. The system comprises a controller with a nacelle mounted Light Detection and Ranging (LIDAR) connected to the controller. The LIDAR measures a hub height wind speed (referred to as a first wind speed) that is experienced by the wind turbine and provides this as an input to the controller. This LIDAR measured hub height windspeed (first wind speed) is more accurate compared to a traditional nacelle anemometer-based wind speed measurement.

The controller of the wind turbine is configured to estimate a second wind speed based on a one or more of performance parameters such as power output, generator speed, generator torque in real time. The controller performs reverse engineering to derive the second wind speed, and the second wind speed is retrievable from a Supervisory Control and Data Acquisition (SCADA) system. This second wind speed is also referred to as estimated wind speed and the derivation of this second wind speed is based on known methods. The estimated wind speed is a reflection of the power output generated by the wind turbine and not the true wind speed experienced by the wind turbine. For example, if the true wind speed is 5 m/s, it is likely that the second wind speed (estimated wind speed) is derived to be 3 m/s. This difference may be due to some fault in the wind turbine because of which is the wind turbine is not able to generate enough power generally expected at 5 m/s.

The controller determines a delta value by calculating a difference between the first wind speed and the second wind speed, followed by comparing the delta value to a pre-defined threshold. If the delta value is below the pre-defined threshold, then no action is required. If all systems are fine and if the wind turbine is performing at its optimum level, then the delta value should ideally be zero or near zero. Thus, the pre-defined threshold value may be zero or a number near to zero such as 0.1-0.9 m/s.

However, if the delta value is above the pre-defined threshold, it is determined that there is roughness in the wind turbine blades. A notification is sent to alert an operator/user. The notification may include the assessment that there is roughness in the wind turbine blades. The delta value, time stamp etc. may also be mentioned in the notification. The notification is typically displayed on the SCADA system or other user interface accessible to the operator/user or maintenance personnel managing the wind turbine.

Optionally, to confirm the aforementioned determination that there is roughness on the wind turbine blades the controller is configured to iteratively adjust (a pre-determined number of times) one or more operational parameters (not related to removing roughness in the wind turbine blades) through known methods such as switching a fine pitch setting, increasing/decreasing a tip speed ratio (TSR), and increasing/reducing a peak shaver setting for increasing the power output of the wind turbine. Each time after the operational parameters is adjusted, the delta value is re-compared to the pre-defined threshold. If there is no roughness in the wind turbine blades, it is expected that the delta value will come below the pre-defined threshold gradually after each iterative adjustment of the operational parameters and no further action is required. However, if after multiple adjustments (pre-determined number of times) of the operational parameters, the delta value remains above the pre-defined threshold, it is now confirmed that there is indeed roughness on the wind turbine blades. Thereafter, a notification is sent to alert the operator/user. The notification may include the assessment that there is roughness in the wind turbine blades. The total number of iterations, delta value at each iteration, time stamp etc. may also be mentioned in the notification. The notification is typically displayed on the SCADA system or other user interface accessible to the operator/user or maintenance personnel managing the wind turbine.

In another aspect of the invention, there is provided a method for determining roughness in wind turbine blades in a wind turbine. As shown in Figure 1, the LIDAR measured first wind speed and controller estimated /derived second wind speed is provided as input to the controller. The controller determines the difference between the first and second wind speed, which is a Delta value. The Delta value is further compared with respect to a pre-determined threshold. If the delta value is below the pre-defined threshold, no action is required. However, if the delta value is above the pre-defined threshold, the operational parameters are adjusted, and the delta value is re-compared to the pre-defined threshold. This process may be repeated multiples times if the delta value continues to remain above the pre-determined threshold or there is no change in the delta value after repeatedly adjusting the operational parameters.

If there is no roughness in the wind turbine blades, it is expected that the delta value will come below the pre-defined threshold gradually after each iterative adjustment of the operational parameters and no further action is required. However, if after multiple adjustments of the operational parameters, the delta value remains above the pre-defined threshold or there is no change, it is now confirmed that there is indeed roughness on the wind turbine blades. The detailed methodology is explained henceforth.

The method comprises of following steps: a nacelle mounted Light Detection and Ranging (LIDAR) connected to a controller of the wind turbine measures a hub height wind speed (referred to as a first wind speed) that is experienced by the wind turbine. This first wind speed is provided as an input to the controller. This LIDAR measured hub height windspeed (first wind speed) is more accurate compared to a traditional nacelle anemometer-based wind speed measurement.

The controller of the wind turbine is configured to estimate a second wind speed based on one or more of performance parameters such as power output, generator speed, generator torque in real time. The controller performs reverse engineering to derive the second wind speed, and the second wind speed is retrievable from a Supervisory Control and Data Acquisition (SCADA) system. This second wind speed is also referred to as estimated wind speed and the derivation of this second wind speed is based on known methods. The estimated wind speed is a reflection of the power output generated by the wind turbine and not the true wind speed experienced by the wind turbine. For example, if the true wind speed is 5 m/s, it is likely that the second wind speed (estimated wind speed) is derived to be 3 m/s. This difference may be due to some fault in the wind turbine because of which the wind turbine is not able to generate enough power generally expected at 5 m/s.

The controller determines a delta value by calculating a difference between the first wind speed and the second wind speed, followed by comparing the delta value to a pre-defined threshold. If the delta value is below the pre-defined threshold, no action is required. If all systems are fine and if the wind turbine is performing at optimum level, then the delta value should ideally be zero or near zero. Thus, the pre-defined threshold value may be zero or a number near to zero such as 0.1-0.9 m/s.

However, if the delta value is above the pre-defined threshold, it is determined that there is roughness in the wind turbine blades. A notification is sent to alert an operator/user. The notification may include the assessment that there is roughness in the wind turbine blades. The delta value, time stamp etc. may also be mentioned in the notification. The notification is typically displayed on the SCADA system or other user interface accessible to the operator/user of maintenance personnel managing the wind turbine.

Optionally to confirm the aforementioned determination that there is roughness on the wind turbine blades, the method includes iteratively adjusting (pre-determined number of times) one or more operational parameters (not related to removing roughness in the wind turbine blades) through known methods such as switching a fine pitch setting, increasing/decreasing a tip speed ratio (TSR), and increasing/reducing a peak shaver setting for increasing the power output of the wind turbine. Each time after the operational parameters is adjusted, the delta value is re-compared to the pre-defined threshold. If there is no roughness in the wind turbine blades, it is expected that the delta value will come below the pre-defined threshold gradually after each iterative adjustment of the operational parameters. However, if after multiple adjustments (pre-determined number of times) of the operational parameters, the delta value remains above the pre-defined threshold, it is now confirmed that there is indeed roughness on the wind turbine blades. A notification is sent to alert the operator/user. The notification may include the assessment that there is roughness in the wind turbine blades. The total number of iterations, delta value at each iteration, time stamp etc. may also be mentioned in the notification. The notification is typically displayed on the SCADA system or other user interface accessible to the operator/user or maintenance personnel managing the wind turbine.

If the roughness in wind blade/s is determined and/or confirmed based on the aforementioned system and/or method, it is also confirmed through a physical inspection of the blade. Thereafter the roughness is removed by an appropriate action, for example, a blade cleaning or washing operation could be scheduled to remove blade fouling or other deposits. In cases where ice may be present on the blades, the appropriate action could involve implementing an ice mitigation strategy, such as activating heaters, or another de-icing system associated with the blades.

In another embodiment, the appropriate action for removing roughness from the blade comprises cleaning, sanding, or applying a protective coating to the blade surface.

In another embodiment, the SCADA system is configured to store historical wind speed data and operational parameters for analysis and comparison.

In an embodiment of the present invention, in the wind turbine, the controller is located inside the nacelle. A computer or another appropriate processing device may be part of the controller. Accordingly, in several implementations, the controller may have appropriate computer-readable instructions that, when executed, set the controller up to carry out a variety of different tasks, including receiving, sending, and/or carrying out wind turbine control signals. Therefore, the controller can be set up to regulate the wind turbine's components and/or different operating modes such as start-up or shut-down processes.

Further, the wind turbine's various sensors being set up to either directly or indirectly help measure the second wind speed, for instance, to provide signals about the operational parameter under observation. The controller can then use these signals to ascertain the derived second wind speed, indicatively based on the current power being generated.

In an embodiment of the present invention, the controller may include one or more processors and associated memory devices configured to perform various computer-implemented functions e.g., executing methods, steps, and calculations disclosed herein. The term "processor" as used here encompasses not only integrated circuits commonly found in computers but also controllers, microcontrollers, microcomputers, programmable logic controllers (PLCs), application-specific integrated circuits (ASICs), and other programmable circuits. Additionally, the memory devices may include memory elements such as computer-readable media (e.g., random access memory (RAM)), computer-readable non-volatile media (e.g., flash memory), floppy disks, compact disc-read only memory (CD-ROM), magnetooptical disks (MOD), digital versatile discs (DVD), and other suitable memory elements. These memory devices are generally configured to store computer-readable instructions that, when executed by the processors, enable the controller to perform various functions, including estimating the second wind speed and monitoring one or more operational parameters of the wind turbine based on signals received from the plurality of sensors, and transmitting control signals to implement appropriate actions in response to the identification of aerodynamically rough blades.

Additionally, the controller may include a communications module to facilitate communication between the controller and various components of the wind turbine. For example, the communications module may act as an interface allowing the turbine controller to transmit control signals to each pitch adjustment mechanism for controlling the pitch angle of the blades. Furthermore, the communications module may include a sensor interface to convert signals transmitted from the sensors into signals that can be understood and processed by the processors. It should be noted that the sensors may be communicatively coupled to the communications module using any suitable means. For instance, the sensors can be connected to the sensor interface via wired connections, or the sensors may be connected to the sensor interface via wireless connections using any suitable wireless communications protocol. Further, the parameter data can also be collected. For instance, the yaw angle of the nacelle might be periodically varied across a range of angles while monitoring one or more operational parameters. Additionally, as wind speed and/or direction changes, the operational parameters can be monitored to collect corresponding data.

In an embodiment of the present invention, the reversed engineered second wind speed can be organized and stored within the controller or another suitable data storage device. Further, the data sets for a particular operational parameter, obtained in response to the second wind speed may be compiled, in which the second wind speed is retrievable from a Supervisory Control and Data Acquisition (SCADA) system. Further, SCADA system is a control system that uses computers, networked data communications, and graphical Human Machine Interfaces (HMIs) to manage and control industrial processes. SCADA systems communicate with other devices, such as programmable logic controllers (PLCs) and PID controllers to interact with industrial process and equipment. The SCADA system includes Master Terminal Units (MTUs), Remote Terminal Units (RTUs), and communication networks for data transfer. The SCADA further systems monitor real-time data, control processes, and store information for analysis and decision-making.

## Claims

1. A system for determining roughness in wind turbine blades, the system comprising:
a Light Detection and Ranging (LIDAR) unit, positioned in proximity of the wind turbine blades to measure a first wind speed;
a controller of the wind turbine, configured to:
determining a second wind speed derived from a plurality of performance parameters of the wind turbine, the second wind speed retrievable from a Supervisory Control and Data Acquisition (SCADA) system connected to the wind turbine;
determining a delta value by calculating a difference between the first wind speed and the second wind speed;
comparing the delta value to a pre-defined threshold; and
determining that there is roughness in the blade if the delta value is greater than the pre-defined threshold.

2. The system as claimed in claim 1, wherein the controller is configured to generate a notification of roughness in the wind turbine blades.

3. The system as claimed in claim 1, wherein upon determining roughness in the wind turbine blades, the controller is configured to iteratively adjust one or more operational parameters, not related to removing the roughness of the wind turbine blades, for increasing the performance of the wind turbine and re-comparing the delta value to the pre-defined threshold wherein if the delta value remains above the pre-defined threshold after the iterative adjusting, the roughness in the wind turbine blade is confirmed.

4. The system as claimed in claim 1, wherein the performance parameters comprise at least one of power output, generator speed, generator torque.

5. The system as claimed in claim 3, wherein the one or more operational parameters comprises at least one of switching a fine pitch setting, increasing/decreasing a tip speed ratio (TSR), and increasing/reducing a peak shaver setting.

6. A method of determining roughness in wind turbine blades, the method comprising:
determining a first wind speed by a Light Detection and Ranging (LIDAR) unit positioned in proximity to the wind turbine blades;
determining a second wind speed, the second wind speed derived from a plurality of performance parameters, the second wind speed retrievable from a Supervisory Control and Data Acquisition (SCADA) system connected to the wind turbine;
determining a delta value by calculating a difference between the first wind speed and
the second wind speed;
comparing the delta value to a pre-defined threshold;
determining that there is a roughness in the blade if the delta value is greater than the pre-defined threshold.

7. The method as claimed in claim 6, wherein a notification is generated upon determining roughness in the wind turbine blades.

8. The method as claimed in claim 6, wherein upon determination of roughness in the wind turbine blades, the controller is configured to iteratively adjust one or more operational parameters not related to removing the roughness of the wind turbine blades, for increasing the performance of the wind turbine and re-comparing the delta value to the pre-defined threshold wherein if the delta value remains above the pre-defined threshold after the iterative adjusting, the roughness in the wind turbine blade is confirmed.

9. The method as claimed in claim 6, wherein the performance parameters comprise at least one of power output, generator speed, generator torque.

10. The method as claimed in claim 8, wherein the one or more operational parameters comprises at least one of switching a fine pitch setting, increasing/decreasing a tip speed ratio (TSR), and increasing/reducing a peak shaver setting.
